(19) Europäisches Patentamt / European Patent Office / Office européen des brevets

(11) **EP 2 887 307 B1**

(12) **FASCICULE DE BREVET EUROPEEN**

(45) Date de publication et mention de la délivrance du brevet:
**30.11.2016 Bulletin 2016/48**

(51) Int Cl.:
***G06T 5/00*** (2006.01)

(21) Numéro de dépôt: **14197530.0**

(22) Date de dépôt: **12.12.2014**

(54) **Procédé de traitement d'images, notamment issues de systèmes de visualisation de nuit et système associé**

Verarbeitungsverfahren von Bildern, insbesondere solchen, die aus Nachtanzeigesystemen stammen, und entsprechendes System

Image-processing method, in particular for images from night-vision systems and associated system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2013 FR 1302980**

(43) Date de publication de la demande:
**24.06.2015 Bulletin 2015/26**

(73) Titulaire: **Thales**
**92400 Courbevoie (FR)**

(72) Inventeur: **Grossetete, Matthieu**
**33150 CENON (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**US-A1- 2004 042 676     US-A1- 2012 301 050**

• **RB LUFKIN ET AL: "Dynamic-range compression in surface-coil MRI", AMERICAN JOURNAL OF ROENTGENOLOGY, vol. 147, no. 2, 1 août 1986 (1986-08-01), pages 379-382, XP055139230, ISSN: 0361-803X, DOI: 10.2214/ajr.147.2.379**

**Description**

Le domaine de l'invention est celui des procédés d'amélioration d'images issues de systèmes d'imagerie vidéo numérique à bas niveau de lumière temps réel et à haute dynamique. Ces systèmes d'imagerie sont utilisés notamment de nuit. Les applications sont nombreuses en particulier dans le domaine aéronautique.

Ce type de système délivre des images qui ne sont pas nécessairement de très bonne qualité, compte-tenu du faible niveau de luminance de la scène. Il existe un certain nombre de traitements d'image permettant d'augmenter la qualité de l'image, en particulier en augmentant ou en réhaussant les contrastes dans les bas niveaux de gris.

On citera les méthodes de réhaussement de contraste suivantes :

- Rehaussement basés sur des réarrangements d'histogrammes globaux ;
- Rehaussement basés sur des réarrangements d'histogrammes locaux ;
- Rehaussement basés sur des approches fréquentielles ;
- Rehaussement basés sur des approches Illumination/réflectance ;
- Rehaussement basés sur le fonctionnement biologique de l'oeil humain de type « Retinex »

Le brevet US 2004/0042676 présente une méthode de réhaussement de contraste.

Cependant, les images issues des systèmes d'imagerie vidéo numérique à bas niveau de lumière sont particulièrement délicates à traiter dans la mesure où elles sont à haute résolution, à haute dynamique, fortement bruitées et délivrées à cadence élevée. Aussi, les traitements d'images classiques mentionnés ci-dessus présentent tous un ou plusieurs des inconvénients suivants :

- Dégradation des scènes à très large dynamique lumineuse par la saturation des zones surexposées de la scène ;
- Augmentation forte du bruit numérique déjà présent dû à l'environnement à bas niveau de lumière ;
- Apparition d' « artefacts » de traitements gênants la compréhension de la scène ;
- Diminution de la résolution de l'image initiale ;
- Incompatibilité du traitement avec un fonctionnement en temps réel à des cadences d'images élevées ;
- Absence de conservation de l'aspect global de la scène.

Le procédé de traitement d'image selon l'invention ne présente pas ces inconvénients. Il est de type à filtrage homomorphique. L'image traitée prend en compte, en effet, l'image initiale et les composantes basses fréquences de cette image de façon à augmenter le contraste de l'image sans augmenter son bruit, l'image finale étant ainsi plus facilement lisible. De plus, cet algorithme s'adapte tout particulièrement au rehaussement de contraste d'une image dans le cadre d'une adaptation de dynamique d'image. On citera, par exemple, le passage d'une dynamique image codée sur 10 bits ou plus provenant d'un senseur à une image finale codée sur 8 bits destinée à l'affichage sur un imageur. En effet, l'algorithme de traitement reposant sur des calculs en virgule flottante ou à virgule fixe de profondeur choisie pour des aspects temps réel, il est alors possible de profiter de toute la dynamique offerte par le senseur durant le traitement puis ensuite d'imposer une dynamique de sortie fixée à l'algorithme lors de la dernière conversion. Cet algorithme peut donc avantageusement s'inscrire dans le cadre d'un remplacement d'une table de conversion effectuant l'adaptation de dynamique entre un capteur et son afficheur.

Plus précisément, l'invention a pour objet un procédé de traitement d'une image numérique initiale $I_{IN}(p)$ composé de pixels (p), ledit procédé comportant au moins les étapes successives suivantes :

Etape 1 : Calcul du logarithme de l'image initiale pour obtenir une première image intermédiaire notée $Log(I_{IN}(p))$ ;

Etape 2 : Filtrage de ladite première image intermédiaire par un filtre basses fréquences pour obtenir une seconde image intermédiaire notée BF(p) ;

Etape 3 : Détermination de la valeur de l'intensité minimale ($Min_{BF}$) et de la valeur de l'intensité maximale ($Max_{BF}$) dans l'image à basses fréquences obtenue à l'étape précédente ;

Etape 4 : Calcul d'une troisième image intermédiaire notée $Log(I_{OUT}(p))$ par la combinaison linéaire suivante :

$$Log(I_{OUT}(p)) = [Log(I_{IN}(p) - BF(p)].[K1.BF(p) + K2] + K3.BF(p) + K4$$

K1, K2, K3 et k4 étant des constantes dépendantes de la différence entre la valeur de l'intensité maximale ($Max_{BF}$) et la valeur de l'intensité minimale ($Min_{BF}$) et de la valeur de l'intensité minimale ($Min_{BF}$) ;

Etape 5 : Calcul de l'image finale $I_{OUT}(p)$ par l'application de la fonction exponentielle sur la troisième image intermédiaire $Log(I_{OUT}(p))$.

Avantageusement, le filtre utilisé à l'étape 2 est un filtre gaussien, dont le sigma est supérieur à 30.

Avantageusement, avec certaines architectures de traitement, l'étape 2 comporte les trois sous-étapes suivantes :

Etape 2.1 : Décomposition pyramidale de la première image intermédiaire en premières images intermédiaires sous-échantillonnées Log($I_{INSSE}(p)$) ;

Etape 2.2 : Filtrage d'une première image intermédiaire sous-échantillonnée par le filtre basses fréquences pour obtenir une seconde image intermédiaire sous-échantillonnée notée BF(p)$_{SSE}$ ;

Etape 2.3 : Recomposition pyramidale de la seconde image intermédiaire sous-échantillonnée pour obtenir la seconde image intermédiaire notée BF(p).

Avantageusement, dans le cas où le procédé est utilisé pour traiter une seconde image numérique succédant immédiatement à une première image numérique, les deux images appartenant à une séquence vidéo, à l'étape 3 du procédé de traitement de la seconde image numérique, la valeur de l'intensité minimale (Min$_{BF}$) et la valeur de l'intensité maximale (Max$_{BF}$) de la seconde image numérique sont choisies égales à la valeur de l'intensité minimale (Min$_{BF}$) et la valeur de l'intensité maximale (Max$_{BF}$) de la première image numérique.

L'invention concerne également un système de visualisation de nuit comportant un dispositif de prises d'images à bas niveau de lumière et des moyens de traitement des images issues dudit dispositif, caractérisé en ce que lesdits moyens mettent en oeuvre le procédé de traitement précédemment décrit.

L'invention sera mieux comprise et d'autres avantages apparaîtront à la lecture de la description qui va suivre donnée à titre non limitatif et grâce aux figures annexées parmi lesquelles :

La figure 1 représente les différentes étapes du procédé de traitement d'image selon l'invention ;

La figure 2 représente une variante de la seconde étape du procédé de traitement d'image selon l'invention.

Une image numérique est composée d'une matrice de pixels p disposés en lignes et en colonnes. Chaque ligne et chaque colonne peut comporter plusieurs centaines à plusieurs milliers de pixels. Chaque pixel est codé numériquement. Dans le cas d'une image monochrome, le codage numérique correspond à un niveau de gris ou « NDG ». Dans ce qui suit, on suppose que l'image est monochrome. Le procédé s'applique, bien entendu, aux images colorées, une image colorée étant la superposition de trois images monochromes dans trois bandes spectrales différentes.

L'image d'une scène $I_{IN}(p)$ peut être décrite comme le produit d'une composante d'illumination ou d'éclairement E(p) par une composante de réflectance R(p). Ainsi, une image initiale $I_{IN}(p)$ peut s'écrire :

$$I_{IN}(p) = R(p).\,E(p)$$

Le coeur du procédé est de traiter séparément et indépendamment ces deux composantes puis de les recombiner pour obtenir une image traitée de meilleure qualité. La façon de procéder est la suivante. Dans un premier temps, on applique une transformation logarithmique notée « Log » sur l'image. On obtient donc :

$$Log(I_{IN}(p)) = Log(R(p).\,E(p)) = Log(R(p)) + Log(E(p))$$

selon les propriétés bien connues des logarithmes.

Généralement, la composante de réflectance comporte les hautes fréquences et la composante d'illumination les basses fréquences. Ainsi, en appliquant un traitement qui sélectionne les basses fréquences, on peut isoler la composante d'illumination Log(E(p)) et lui appliquer un traitement particulier destiné, par exemple, à diminuer les grandes variations d'illumination provenant d'une variation brutale du gain d'un système de capture. On recombine alors les composantes traitées Log(R(p)) et Log(E(p)) pour obtenir la fonction suivante Log($I_{out}(p)$), $I_{out}(p)$ correspondant à la transformation logarithmique de l'image traitée finale. Il suffit alors d'appliquer la fonction exponentielle sur cette image logarithmique pour obtenir l'image traitée finale en valeur « réelle », en virgule flottante ou en virgule fixe de profondeur judicieusement choisie, ce qui peut s'écrire :

$$Exp[Log(I_{out}(p))] = I_{out}(p)$$

Il ne reste plus ensuite qu'à échantillonner par une table de conversion adaptée cette image finale réelle en image de dynamique choisie. Dans le cadre d'un système de visualisation, il s'agit de la dynamique de l'afficheur.

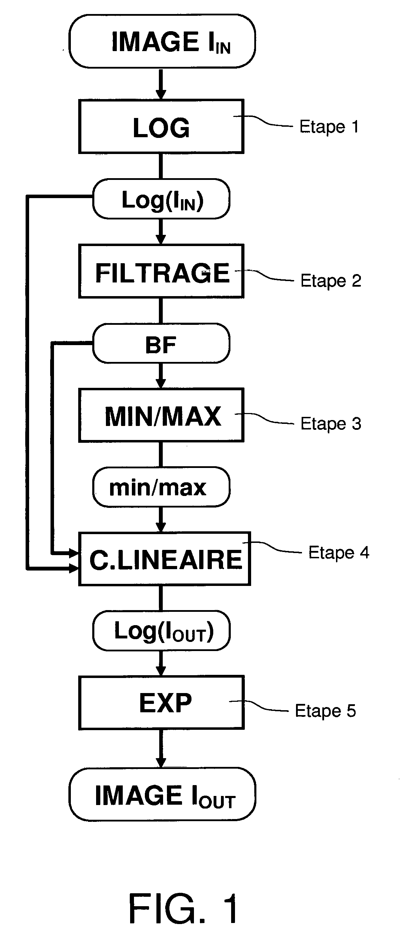

De façon plus précise, la figure 1 représente les différentes étapes du procédé de traitement d'une image numérique pixellisée selon l'invention. Celles-ci sont les suivantes :

Etape 1 notée « LOG » : Calcul du logarithme de l'image initiale $I_{IN}(p)$ pour obtenir une première image intermédiaire notée $Log(I_{IN})$. Le logarithme ainsi calculé attribue à chaque pixel p des valeurs « réelles » simulé par des nombres à virgule flottante ou à virgule fixe d'une « profondeur » judicieusement sélectionnée. La profondeur correspond au nombre de bits sélectionné.

Etape 2 notée « FILTRAGE » : Filtrage de ladite première image intermédiaire $Log(I_{IN}(p))$ par un filtre basses fréquences pour obtenir une seconde image intermédiaire notée $BF(p)$. Cette seconde image intermédiaire correspond peu ou prou à la composante d'illumination de l'image comme on l'a vu précédemment.

Le filtre utilisé est préférentiellement un filtre gaussien, dont le sigma est supérieur à 30. Plus précisément, ce sigma dépend fortement de la résolution angulaire du système de capture. Dans le cadre des systèmes de capture des systèmes de vision de nuit actuels, un « bon » sigma vaut environ 60. Le filtrage consiste à convoluer la première image intermédiaire avec une fonction gaussienne. On sait qu'une des propriétés de la fonction gaussienne est d'avoir une transformée de Fourier qui est également une fonction gaussienne. Celle-ci ne présente donc pas de rebond dans l'espace fréquentiel à la différence d'autres fonctions comme la fonction « porte », par exemple.

Etape 3 notée « MIN/MAX » : Détermination de la valeur de l'intensité minimale ($Min_{BF}$) et de la valeur de l'intensité maximale ($Max_{BF}$) dans les pixels de l'image $BF(p)$ à basses fréquences obtenue à l'étape précédente.

Etape 4 notée « C.LINEAIRE » : Calcul d'une troisième image intermédiaire notée $Log(I_{OUT}(p))$ par la combinaison linéaire suivante :

$$Log(I_{OUT}(p)) = [Log(I_{IN}(p)) - BF(p)] . [K1.BF(p) + K2] + K3.BF(p) + K4$$

K1, K2, K3 et K4 étant des constantes dépendantes au premier ordre de :

- l'inverse de la différence entre la valeur de l'intensité maximale et la valeur de l'intensité minimale qui vaut :

$$1/(Max_{BF} - Min_{BF}) ;$$

- la valeur de l'intensité maximale $Max_{BF}$ et ;
- la valeur de l'intensité minimale $Min_{BF}$

A titre d'exemple, les constantes K1, K2, K3 et K4 valent :

- $K1 = (1 - \alpha) / (Max_{BF} - Min_{BF})$
- $K2 = \alpha - K1. Min_{BF}$
- $K3 = (Max_{BF} - \beta) / (Max_{BF} - Min_{BF})$
- $K4 = \beta - K3. Min_{BF}$
  $\alpha$ et $\beta$ étant des constantes paramétrables.

Cette combinaison linéaire permet de pondérer séparément la composante de réflectance qui vaut $[Log(I_{IN}(p)) - BF(p)]$ et la composante d'illumination qui vaut $BF(p)$, de tenir compte de l'amplitude d'éclairement qui vaut $(Max_{BF} - Min_{BF})$ et des niveaux d'éclairement correspondant aux valeurs de l'intensité maximale $Max_{BF}$ et de l'intensité minimale $Min_{BF}$

Etape 5 notée « EXP » : Calcul de l'image finale $I_{OUT}(p)$ par l'application de la fonction exponentielle sur la troisième image intermédiaire $Log(I_{OUT}(p))$. Cette fonction est tabulée, pour chaque pixel, à la précision en « Bits Par pixels » ou « BPP » exigée en sortie du traitement.

Si les images numériques traitées sont des images vidéo nécessitant un traitement en temps réel, il est impératif que la durée du traitement de chaque image se fasse à la cadence d'acquisition, soit en quelques dizaines de millisecondes. Dans ce cas, il est important d'optimiser le temps de calcul et les différentes opérations de traitement de l'image. Dans ce cas, l'étape 2 peut comporter une sous-étape de décomposition pyramidale de l'image. La décomposition pyramidale se fait par étapes successives. A chaque étape, on regroupe des pixels adjacents par blocs comportant des nombres de pixels de plus en plus élevés selon des lois de regroupement prenant en compte les variations d'intensité de chaque pixel. Ainsi, plus on monte dans la « pyramide », moins elle contient de blocs et plus les blocs comprennent un nombre de pixels important. La décomposition pyramidale peut se faire avec perte d'informations ou sans perte d'informations.

Pour retrouver l'image initiale, on décompose, par étapes successives, chaque bloc en sous-blocs jusqu'à retrouver le nombre de pixels d'origine. On comprend que, si on applique un traitement sur les blocs de rang élevé, on peut ainsi traiter simultanément un grand nombre de pixels et réduire les temps de calcul.

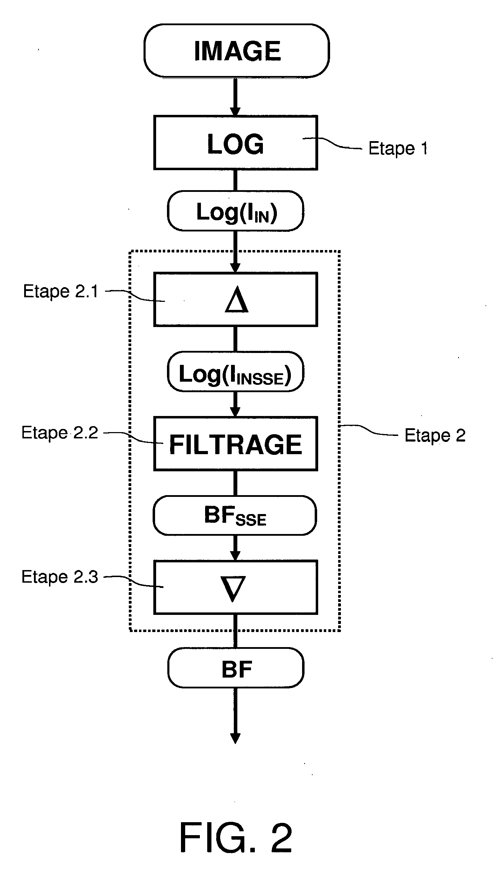

L'étape 2 met en oeuvre cette technique de façon à diminuer les temps de traitement et à les rendre compatibles d'un traitement en temps réel. Elle comporte alors, comme indiqué en figure 2, les trois sous-étapes suivantes :

Etape 2.1 notée « $\Delta$ » : Décomposition pyramidale de la première image intermédiaire en premières images intermédiaires sous-échantillonnées $Log(I_{INSSE}(p))$.
Etape 2.2 notée « FILTRAGE » : Comme précédemment, filtrage d'une première image intermédiaire sous-échantillonnée par le filtre basses fréquences pour obtenir une seconde image intermédiaire sous-échantillonnée notée $BF_{SSE}$.
Etape 2.3 notée « $\nabla$ » : Recomposition pyramidale de la seconde image intermédiaire sous-échantillonnée pour obtenir la seconde image intermédiaire notée, comme précédemment BF.

Les autres étapes du traitement d'image restent inchangées.

Dans le cadre d'un traitement vidéo, il est avantageux de paramétrer la combinaison linéaire avec les valeurs de l'intensité minimale ($Min_{BF}$) et les valeurs de l'intensité maximale ($Max_{BF}$) obtenues dans la ou les trames d'images immédiatement précédentes de manière à pouvoir accélérer le traitement d'images.

Le procédé de traitement selon l'invention est particulièrement bien adapté aux systèmes de visualisation de nuit comportant un dispositif de prises d'images à bas niveau de lumière. Ces systèmes donnent, en effet, des images généralement bruitées, compte-tenu du faible niveau d'éclairement et qu'il est donc nécessaire de traiter.

## Revendications

**1.** Procédé de traitement d'une image numérique initiale $I_{IN}(p)$ composé de pixels (p), ledit procédé comportant au moins les étapes successives suivantes :

Etape 1 : Calcul du logarithme de l'image initiale pour obtenir une première image intermédiaire notée $Log(I_{IN}(p))$ ;
Etape 2 : Filtrage de ladite première image intermédiaire par un filtre basses fréquences pour obtenir une seconde image intermédiaire notée BF(p) ;
Etape 3 : Détermination de la valeur de l'intensité minimale ($Min_{BF}$) et de la valeur de l'intensité maximale ($Max_{BF}$) dans l'image à basses fréquences obtenue à l'étape précédente ;
Etape 4 : Calcul d'une troisième image intermédiaire notée $Log(I_{OUT}(p))$ par la combinaison linéaire suivante :

$$Log(I_{OUT}(p)) = [Log(I_{IN}(p) - BF(p)]. [K1.BF(p) + K2] + K3.BF(p) + K4$$

K1, K2, K3 et K4 étant des constantes dépendantes de la différence entre la valeur de l'intensité maximale ($Max_{BF}$) et la valeur de l'intensité minimale ($Min_{BF}$) et de la valeur de l'intensité minimale ($Min_{BF}$) ;
Etape 5 : Calcul de l'image finale $I_{OUT}(p)$ par l'application de la fonction exponentielle sur la troisième image intermédiaire $Log(I_{OUT}(p))$.

**2.** Procédé de traitement selon la revendication 1, **caractérisé en ce que** le filtre utilisé à l'étape 2 est un filtre gaussien, dont le sigma est supérieur à 30.

**3.** Procédé de traitement selon l'une des revendications 1 ou 2, **caractérisé en ce que** l'étape 2 comporte les trois sous-étapes suivantes :

Etape 2.1 : Décomposition pyramidale de la première image intermédiaire en premières images intermédiaires sous-échantillonnées Log($I_{INSSE}$(p)) ;
Etape 2.2 : Filtrage d'une première image intermédiaire sous-échantillonnée par le filtre basses fréquences pour obtenir une seconde image intermédiaire sous-échantillonnée notée $BF_{SSE}$(p) ;
Etape 2.3: Recomposition pyramidale de la seconde image intermédiaire sous-échantillonnée pour obtenir la seconde image intermédiaire notée BF(p).

**4.** Procédé de traitement selon l'une des revendications précédentes, **caractérisé en ce que**, dans le cas où le procédé est utilisé pour traiter une seconde image numérique succédant immédiatement à une première image numérique, les deux images appartenant à une séquence vidéo, à l'étape 3 du procédé de traitement de la seconde image numérique, la valeur de l'intensité minimale ($Min_{BF}$) et la valeur de l'intensité maximale ($Max_{BF}$) de la seconde image numérique sont choisies égales à la valeur de l'intensité minimale ($Min_{BF}$) et à la valeur de l'intensité maximale ($Max_{BF}$) de la première image numérique.

**5.** Système de visualisation de nuit comportant un dispositif de prises d'images à bas niveau de lumière et des moyens de traitement des images issues dudit dispositif, **caractérisé en ce que** lesdits moyens mettent en oeuvre un procédé de traitement selon l'une des revendications 1 à 4.

## Patentansprüche

**1.** Verfahren zum Verarbeiten eines digitalen Anfangsbildes $I_{IN}$(p), bestehend aus Pixeln (p), wobei das Verfahren wenigstens die folgenden aufeinander folgenden Schritte beinhaltet:

Schritt 1: Berechnen des Logarithmus des Anfangsbildes, um ein erstes Zwischenbild mit der Bezeichnung Log($I_{IN}$(p)) zu erhalten;
Schritt 2: Filtern des ersten Zwischenbildes mit einem Tiefpassfilter, um ein zweites Zwischenbild mit der Bezeichnung BF(p) zu erhalten;
Schritt 3: Ermitteln des Wertes der minimalen Intensität ($Min_{BF}$) und des Wertes der maximalen Intensität ($Max_{BF}$) in dem im vorherigen Schritt erhaltenen Bild mit niedrigen Frequenzen;
Schritt 4: Berechnen eines dritten Zwischenbildes mit der Bezeichnung Log($I_{OUT}$(p)) durch die folgende Linearkombination:

$$\mathrm{Log}(I_{OUT}(p)) = [\mathrm{Log}(I_{IN}(p) - BF(p)] \,.\, [K1.BF(p) + K2] + K3.BF(p) + K4$$

wobei K1, K2, K3 und K4 Konstanten sind, die von der Differenz zwischen dem Wert der maximalen Intensität ($Max_{BF}$) und dem Wert der minimalen Intensität ($Min_{BF}$) oder der minimalen Intensität ($Min_{BF}$) abhängig sind;
Schritt 5: Berechnen des Endbildes $I_{OUT}$(p) durch Anwenden der Exponentialfunktion auf das dritte Zwischenbild Log($I_{OUT}$(p)).

**2.** Verarbeitungsverfahren nach Anspruch 1, **dadurch gekennzeichnet, dass** das in Schritt 2 verwendete Filter ein Gaußsches Filter ist, dessen Sigma-Wert größer als 30 ist.

**3.** Verarbeitungsverfahren nach Anspruch 1 oder 2, **dadurch gekennzeichnet, dass** Schritt 2 die folgenden drei Unterschritte beinhaltet:

Schritt 2.1: pyramidenartiges Zerlegen des ersten Zwischenbildes in unterabgetastete erste Zwischenbilder Log($I_{INSSE}$(p));
Schritt 2.2: Filtern eines ersten unterabgetasteten Zwischenbildes mit dem Tiefpassfilter, um ein zweites unterabgetastetes Zwischenbild mit der Bezeichnung $BF_{SSE}$(p) zu erhalten;
Schritt 2.3: pyramidenförmiges erneutes Zusammensetzen des zweiten unterabgetasteten Zwischenbildes, um das zweite Zwischenbild mit der Bezeichnung BF(p) zu erhalten.

**4.** Verarbeitungsverfahren nach einem der vorherigen Ansprüche, **dadurch gekennzeichnet, dass** in dem Fall, in dem das Verfahren zum Verarbeiten eines digitalen zweiten Bildes benutzt wird, das unmittelbar auf ein digitales erstes Bild folgt, wobei die beiden Bilder zu einer Videofolge gehören, in Schritt 3 des Verfahrens zum Verarbeiten des zweiten digitalen Bildes der Wert der minimalen Intensität (Min$_{BF}$) und der Wert der maximalen Intensität (Max$_{BF}$) des zweiten digitalen Bildes gleich dem Wert der minimalen Intensität (Min$_{BF}$) und dem Wert der maximalen Intensität (Max$_{BF}$) des digitalen ersten Bildes gewählt werden.

**5.** Nachtsichtsystem, das eine Vorrichtung zum Aufnehmen von Bildern mit geringem Lichtniveau und Mittel zum Verarbeiten der von der Vorrichtung ausgegebenen Bilder umfasst, **dadurch gekennzeichnet, dass** die Mittel ein Verarbeitungsverfahren nach einem der Ansprüche 1 bis 4 ausführen.

**Claims**

**1.** Method of processing an initial digital image I$_{IN}$(p) made up of pixels (p), said method comprising at least the following successive steps:

Step 1: calculating the logarithm of the initial image in order to obtain a first intermediate image Log(I$_{IN}$(p));
Step 2: filtering said first intermediate image using a low-frequency filter in order to obtain a second intermediate image BF(p);
Step 3: determining the value of the minimum intensity (Min$_{BF}$) and the value of the maximum intensity (Max$_{BF}$) in the low-frequency image obtained in the previous step;
Step 4: calculating a third intermediate image Log(I$_{OUT}$(p)) using the following linear combination:

$$\mathrm{Log(I_{OUT}(p)) = [Log(I_{IN}(p) - BF(p)]\ .\ [K1.BF(p) + K2] + K3.BF(p) + K4}$$

K1, K2, K3 and K4 being constants dependent upon the difference between the value of the maximum intensity (Max$_{BF}$) and the value of the minimum intensity (Min$_{BF}$) or the value of the minimum intensity (Min$_{BF}$);
Step 5: calculating the final image I$_{OUT}$(p) by applying the exponential function to the third intermediate image Log(I$_{OUT}$(p)).

**2.** Processing method according to claim 1, **characterized in that** the filter used in step 2 is a Gaussian filter, the sigma of which is greater than 30.

**3.** Processing method according to either claim 1 or 2, **characterized in that** step 2 includes the following three sub-steps:

Step 2.1: pyramidal decomposition of the first intermediate image into first sub-sampled intermediate images Log(I$_{INSSE}$(p));
Step 2.2: filtering a first sub-sampled intermediate image using the low-frequency filter in order to obtain a second sub-sampled intermediate image BF$_{SSE}$(p);
Step 2.3: pyramidal recomposition of the second sub-sampled intermediate image in order to obtain the second intermediate image BF(p).

**4.** Processing method according to one of the preceding claims, **characterized in that**, in the case where the method is used to process a second digital image immediately following a first digital image, both images belonging to a video sequence, at step 3 of the method of processing the second digital image, the value of the minimum intensity (Min$_{BF}$) and the value of the maximum intensity (Max$_{BF}$) of the second digital image are chosen to be equal to the value of the minimum intensity (Min$_{BF}$) and to the value of the maximum intensity (Max$_{BF}$) of the first digital image.

**5.** Night vision system including a low-light level image capturing device and means for processing the images from said device, **characterized in that** said means implement a processing method according to one of claims 1-4.

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040042676 A